# EUROPEAN PATENT APPLICATION

(11) **EP 1 839 968 A2**
(43) Date of publication of application: **03.10.2007**
(21) Application number: 07104969.6
(22) Date of filing: 27.03.2007
(51) Int. Cl.: B60S 1/04, B60S 1/58

(54) **Motor with reduction gear**

(30) Priority: 29.03.2006 JP 2006092511
(71) Applicant: Mitsuba Corporation, Kiryu-shi, Gunma 376-8555 (JP)
(72) Inventor: Takada, Sadaki, Kiryu-shi Gunma 376-8555 (JP)
(74) Representative: Vogel, Andreas

(57) **Abstract**

A wiper motor which can prevent an impact force from greatly acting on attaching parts is provided. A gear cover (40) formed in a substantially T-plate shape is fastened to an opening of a gear case (21) of the wiper motor used in a rear wiper device so as to cover a worm reduction gear (22) and a crank device (25). A first attaching part (43) and a second attaching part (44) are formed at both end portions of a first band-shaped part (41) of a T-shaped longitudinal member of the gear cover (40) so as to have a relation to sandwich a wiper shaft (31) therebetween. A third attaching part (45) is formed at a tip portion of a second band-shaped part (42) crossing the first band-shaped part (41) in a T shape so as to have a relation to sandwich a rotation axis (12) of an electric motor (10) therebetween and face the second attaching part (44). A gravity center of the motor part (10) and the gear part (20) is arranged within an area of a triangle formed by the first attaching part (43), the second attaching part (44), and the third attaching part (45).

## Description

### TECHNICAL FIELD OF THE INVENTION

The present invention relates to a motor with a reduction gear and more specifically to an attaching structure of the motor with a reduction gear, for example, to a technique effectively used in a rear wiper device of an automobile.

### BACKGROUND OF THE INVENTION

The wiper motor used in the rear wiper device of the automobile includes a wiper motor comprising a motor part having an electric motor, a gear part having a reduction gear which is housed in a gear case coupled to the motor part and deaccelerates rotation of a rotation axis of the electric motor to convert the rotation to an oscillating motion and to transmit it to a wiper shaft, and a gear cover covering an opening of the gear case.

When such a wiper motor is attached to a panel of a tailgate of the automobile, attaching parts provided at three positions of the gear cover are fastened to the panel by bolts and nuts. For example, see Japanese Patent Laid-Open Publication No. 11-508850 (Domestic Publication after PCT International Publication).

### SUMMARY OF THE INVENTION

In such a rear wiper device, the three attaching parts of the wiper motor are disposed in the same direction with respect to the electric motor. Therefore, there is such a problem that an impact force due to inertia caused by the wiper motor when the tailgate is opened/closed acts greatly on the three attaching parts.

An object of the present invention is to provide a motor with a reduction gear, which can prevent an impact force from being greatly exerted on some attaching parts.

Representative ones of means for solving the above problem are as follows.
(1) A motor with a reduction gear according to the present invention comprises:
   a motor part having an electric motor;
   a gear part having a reduction gear housed in a bottomed gear case coupled to the motor part, the reduction gear deaccelerating rotation of a rotation axis of the electric motor to transmit it to an output shaft; and
   a gear cover covering an opening of the gear case,
   wherein the gear cover is formed integrally with:
   a first band-shaped part having a first attaching part and a second attaching part between which the outer shaft is sandwiched and which face each other; and
   a second band-shaped part having a third attaching part which face the second attaching part, the rotation axis being sandwiched between the third attaching part and the second attaching part.
(2) The motor with a reduction gear according to item (1) is such that a gravity center of the motor part and the gear part is disposed within an area of a triangle connecting the first attaching part, the second attaching part, and the third attaching part.
(3) The motor with a reduction gear according to item (1) or (2) is such that the first, second, and third attaching parts are formed in a same plane.

According to above item (1), since the output shaft is arranged between the first attaching part and the second attaching part of the first band-shaped part, the gear cover and the gear case can rigidly support the output shaft. Accordingly, the reduction gear can securely transmit the rotation of the electric motor to the output shaft and can suppress an occurrence of operation noise of the motor with a reduction gear at a time of continuous operations of the motor.

Also, since the third attaching part is disposed on an opposite side to the first attaching part and the second attaching part so as to sandwich the rotation axis of the electric motor therebetween, the gear cover supports the motor with a reduction gear at three outside positions. Accordingly, for example, an impact force caused by the inertia of the motor with a reduction gear at the time of the opening/closing operations of the tailgate can be much effectively supported.

To the contrary, since the impact force caused by the inertia of the motor with a reduction gear can be prevented from greatly acting on the three attaching parts, an attaching strength of the motor with a reduction gear to the vehicle body can be enhanced.

Further, for example, when the motor with a reduction gear is used in the rear wiper device, the first band-shaped part can be disposed at a position close to a rear windshield glass surface of the vehicle body of the panel of the tailgate etc. while maintaining its balance. Accordingly, layout performance of the motor with a reduction gear with respect to the rear windshield glass can be improved.

According to above item (2), since the gravity center is arranged within the area of the triangle, for example, the impact force applied to the motor with a reduction gear and its attaching parts at the time of the opening/closing operations of the tailgate can be much further suppressed.

According to above item (3), since the gear cover can be formed in a flat plate shape, a process by pressing etc. can be facilitated. Concurrently, for example, since the attaching directions of the vehicle body become the same, assembling work can be simplified.

### BRIEF DESCRIPTION OF THE DRAWINGS

FIG. 1 is a perspective view showing a wiper motor according to an embodiment of the present invention;
FIG. 2 is a rear view thereof;
FIG. 3 is a rear view showing a state in which a gear cover is removed;
FIG. 4 is a partially broken side view showing an attaching state of the wiper motor to a panel; and
FIG. 5 is a perspective view showing a wiper motor according to a second embodiment of the present invention.

### DESCRIPTION OF THE PREFERRED EMBODIMENTS

Hereinafter, embodiments of the present invention will be described based on the accompanying drawings.

In the present embodiment, a motor with a reduction gear according to the present invention is constructed as a wiper motor used in a rear wiper device.

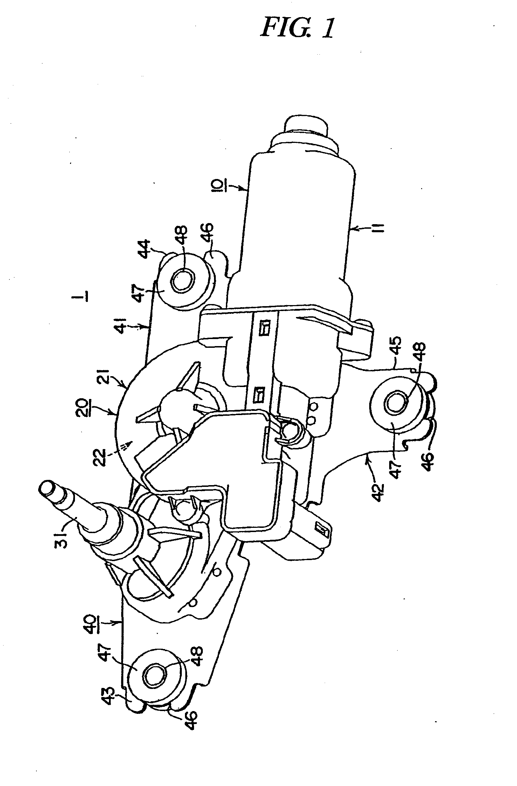

As shown in FIG. 1, a wiper motor 1 includes a motor part 10 having an electric motor 11, and a gear part 20 having a worm reduction gear 22 as a reduction gear. The motor part 10 and the gear part 20 are adjacently disposed and are fastened by bolts.

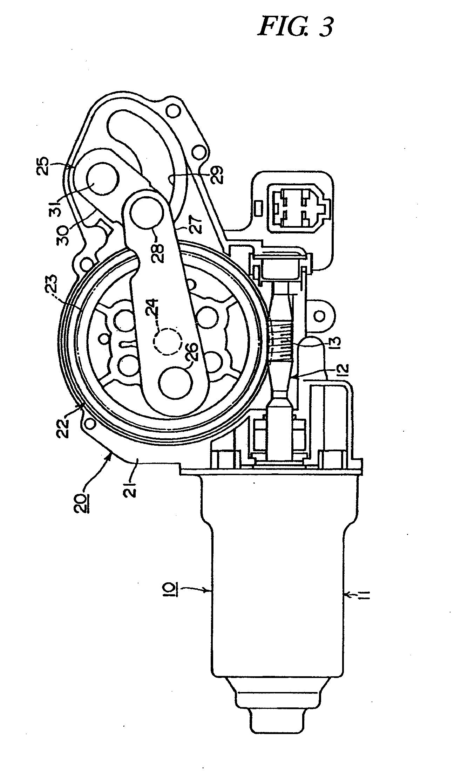

As shown in FIG. 3, a rotation axis (armature shaft) of the electric motor 11 is inserted into a gear case 21 having a bottom portion of the gear part 20 to be rotatably bridged therebetween. A worm 13 is formed on a middle portion of a rotation axis 12.

A worm wheel 23 of the worm reduction gear 22 is engaged with the worm 13. The worm wheel 23 is disposed in the same plane as that of the rotation axis 12.

A wheel shaft 24 as an output shaft of the worm reduction gear 22 is fixed on a center line of the worm wheel 23. The wheel shaft 24 is disposed in a plane orthogonal to the rotation axis 12 to be rotatably supported by the gear case 21.

The worm 13 and the worm wheel 23 are set to sufficiently deaccelerate rotation of the rotation axis 12 and transmit it to the wheel shaft 24.

To the wiper motor 1 for the rear wiper device according to the present embodiment, a crank device 25 converting the rotation deaccelerated by the worm reduction gear 22 to an oscillating motion (reciprocating rotation motion with 360 degrees or below) is coupled.

That is, a crankshaft 26 of the crank device 25 is orthogonally fixed at a position spaced from the wheel shaft 24 of the worm wheel 23. One end portion of a connecting rod 27 is rotatably connected to the crankshaft 26. The other end portion of the connecting rod 27 is rotatably coupled to a free end portion of a lever 30 by a pin 28 guided by a guide groove 29. A fixed end of the lever 30 is coupled to a wiper shaft 31 rotatably supported by the gear case 21 outside the worm wheel 23.

When the crankshaft 26 rotates 180 degrees about the wheel shaft 24, the lever 30 is moved forward up to a predetermined angle. When the crankshaft 26 rotates the remaining 180 degrees thereabout, the lever 30 is inverted to move backward up to the predetermined angle. Therefore, the wiper shaft 31 as a final output shaft results from performing an oscillating motion up to the predetermined angle.

The gear case 21 is molded integrally in a housing case shape, whose one end is opened, by an aluminum die cast method using aluminum. One end portion of the wiper shaft 31 passes through a closed wall of the gear case 21 and protrudes outside.

A protruding end portion of the wiper shaft 31 is configured so as to support fixedly a base end portion of a wiper arm. A wiper blade for wiping a rear windshield glass is attached to a free end portion of the wiper arm.

A gear cover 40 covers an opening of the gear case 21 so as to cover the worm reduction gear 22 and the crank device 25 in the gear case and is fastened to the gear case by bolts.

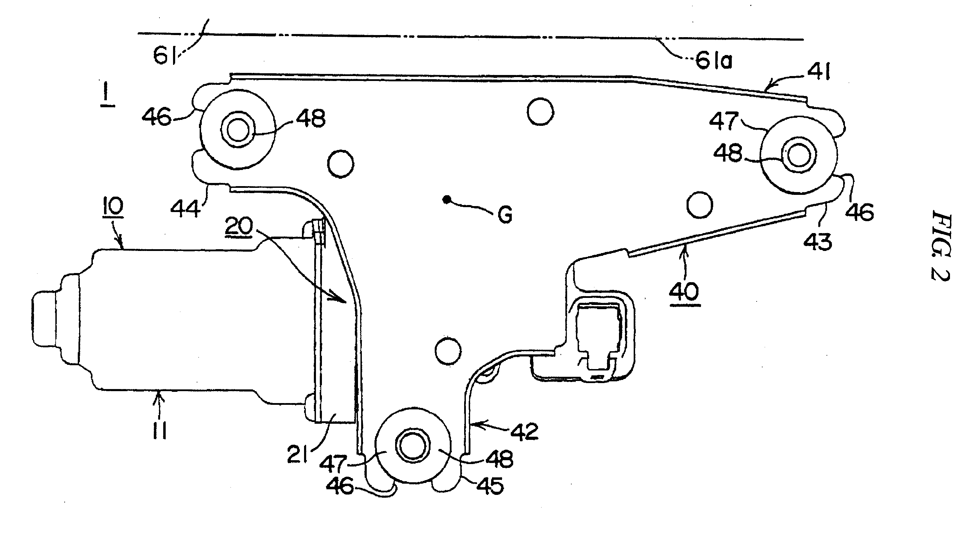

As shown in FIG. 2, the gear cover 40 is formed in a substantially T-plate shape by pressing an iron plate when viewed from a plane. A T-shaped longitudinal member of the gear cover 40 forms a first band-shaped part 41. A T-shaped lateral member forms a second band-shaped part 42.

A first attaching part 43 and a second attaching part 44 are formed at both end portions of the first band-shaped part 41. Since the first attaching part 43 and the second attaching part 44 are disposed at both end portions of the first band-shaped part 41, they have a relation to sandwich the wiper shaft 31 therebetween and face each other.

A third attaching part 45 is formed at a tip portion of the second band-shaped part 42. The third attaching part 45 is disposed at the tip portion of the second band-shaped part 42 crossing the first band-shaped part 41 in a T shape, so that it has a relation to sandwich the rotation axis 12 therebetween and face the second attaching part 44.

As shown in FIGS. 1 and 3, since the gear cover 40 is formed in a plate shape, the first attaching part 43, the second attaching part 44, and the third attaching part 45 are arranged in the same plane.

Since the first attaching part 43, the second attaching part 44, and the third attaching part 45 are arranged respectively at three end portions of the T-shaped gear cover 40, three segments connecting the first attaching part 43, the second attaching part 44, and the third attaching part 45 form a triangle. Therefore, a relation among the gear cover 40, the motor part 10, and the gear part 20 is designed so that a gravity center G of the motor part 10 and the gear part 20 (see FIG. 2) falls within an area of the triangle.

Incidentally, the gravity center G as mentioned in the present invention is described based on a position as having been viewed from a direction parallel to an axis line of the wiper shaft, that is, on the case of being viewed from a plane.

A direction of being acted on by the gravity center G at a time of a closing operation of the tailgate is directed toward an opposite direction to a tip of the wiper shaft 31. However, since respective distances from the gravity center G to the first attaching part 43, the second attaching part 44, and the third attaching part 45 are substantially equal to each other, respective impact forces acting on their attaching legs can be suppressed.

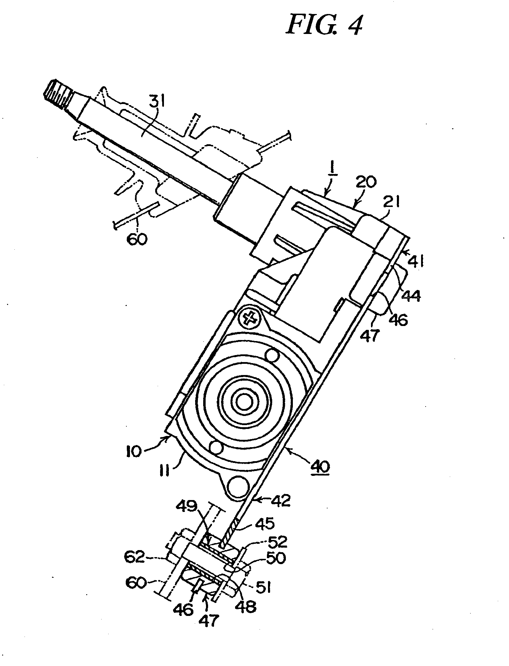

The first attaching part 43, the second attaching part 44, and the third attaching part 45 have substantially the same structure. Therefore, the structure of the third attaching part 45 will be described as a representative example with reference to FIG. 4.

As shown in FIG. 4, the third attaching part 45 has a notch part 46.

A molding material having a resilient force of a rubber or resin is used in the notch part 46. A mount rubber 47 molded in a substantially cylindrical shape is fitted to the notch part 46. A cylindrical-shaped collar 49 obtained by rounding a metal plate is inserted into an insertion hole 48 of the mount rubber 47.

A bolt 51 is inserted into an insertion hole 50 of the collar 49 through a washer 52 (see both shown by imaginary lines of FIG. 4).

Each direction of inserting the bolts 51 into the first attaching part 43, the second attaching part 44, and the third attaching part 45 is parallel with an axial direction of the wiper shaft 31. Further, the gear cover 40 is disposed to be vertical to the inserting directions of the respective bolts and the axial direction of the wiper shaft. Accordingly, when the wiper motor is operated, a bending stress etc. is hard to act on the first attaching part, the second attaching part, and the third attaching part.

The thus-structured wiper motor 1 is supplied from a wiper motor manufacturer to an automobile manufacturer.

In the automobile manufacturer, the wiper motor 1 is disposed near a rear windshield glass 61 (see FIG. 2) of a panel 60 of the tailgate. Concurrently, as shown by the imaginary lines in FIG. 4, the bolts 51 inserted into the three attaching parts 43, 44, and 45 of the gear cover 40 are screwed into nuts 62 previously fixed to the panel 60.

At this time, as shown by the imaginary line in FIG. 2, the wiper motor 1 is disposed on the panel 60 of the tailgate so that the first band-shaped part 41 of the gear cover 40 becomes close to and parallel with an outer edge side 61a of the rear windshield glass 61. Therefore, the rear wiper device can be installed on the rear windshield glass 61 with satisfactory layout performance.

In the wiper motor 1 in which each of the three attaching parts 43, 44, and 45 of the gear cover 40 is provided with the mount rubber 47 to be fastened by the bolts 51 and the nuts 62, the three mount rubbers 47 prevent a phenomenon in which vibration caused by operating the electric motor 11 is transmitted to a side of the panel 60. Therefore, noise can be prevented from being caused.

According to the above embodiment, the following effects can be obtained.
1) Since the wiper shaft is disposed between the first attaching part and the second attaching part of the first band-shaped part, the gear cover and the gear case can rigidly support the wiper shaft. Accordingly, the worm reduction gear can securely transmit the rotation of the electric motor to the wiper shaft and can suppress an occurrence of operation noise of the wiper motor at a time of its continuous operations.
2) Since the third attaching part is disposed on an opposite side to the first attaching part and the second attaching part so as to sandwich the rotation axis of the electric motor therebetween, the gear cover supports the wiper motor at three outside positions. Accordingly, it is possible to very effectively support the impact force caused by the inertia of the wiper motor when the tailgate is opened/closed.
3) To the contrary, the impact force caused by the inertia of the wiper motor can be prevented from greatly acting on the three attaching parts. Therefore, an attaching strength of the wiper motor to the panel of the tailgate can be enhanced.
4) The first attaching part and the second attaching part are arranged at both end portions of the first band-shaped part so as to have a relation to sandwich the wiper shaft therebetween and face each other. Accordingly, the wiper motor can be disposed also on the panel of the tailgate so that the first band-shaped part of the gear cover becomes close to and parallel with the outer edge side of the rear windshield glass. Therefore, the rear wiper device can be installed on the rear windshield glass with satisfactory layout performance.
5) The gravity center of the motor part and the gear part is disposed within the area of the triangle formed by the first attaching part, the second attaching part, and the third attaching part. Accordingly, the impact forces applied to the motor with a reduction gear and its attaching parts at the time of the opening/closing operations of the tailgate can be much further suppressed.
6) Since the gear cover is formed in a flat plate shape, a process by pressing etc. can be facilitated and concurrently the attaching directions of the panel to the tailgate become the same. Therefore, its assembling operation can be simplified.

Incidentally, needless to say, the present invention is not limited to the above embodiments and can be variously modified and varied within the scope of not departing from the gist thereof.

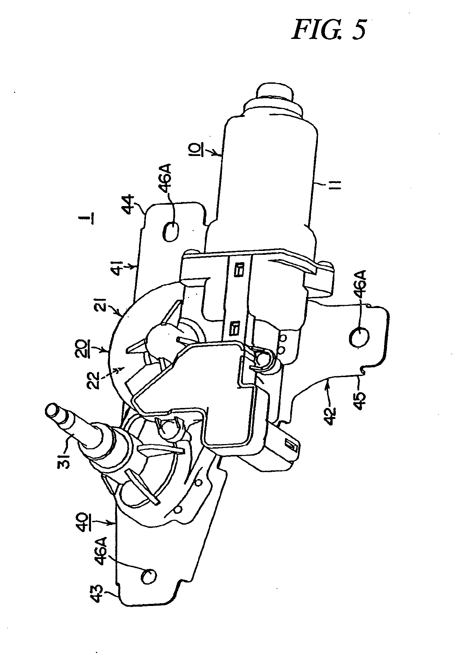

For example, as shown in FIG. 5, the notch parts 46 of the three attaching parts may be replaced with attaching holes 46A.

In this case, the panel of the tailgate and the like may be directly attached to the vehicle body without using the mount rubbers.

The reduction gear for deaccelerating the rotation of the electric motor is not limited to the worm reduction gear and may use a planetary reduction gear etc.

A motion converting device coupled to the reduction gear to convert the deaccelerated rotation to the oscillating motion is not limited to the use of the crank device and may be omitted.

In the above embodiments, the wiper motor for the rear wiper device has been described. However, the present invention is not limited to this and can be applied to motors with a reduction gear, which are generally used in a power window device and a power seat device, etc. in addition to a front wiper device.

## Claims

1. A motor with a reduction gear, the motor comprising:
a motor part having an electric motor;
a gear part having a reduction gear housed in a bottomed gear case coupled to the motor part, the reduction gear deaccelerating rotation of a rotation axis of the electric motor to transmit it to an output shaft; and
a gear cover covering an opening of the gear case,
wherein the gear cover is formed integrally with:
a first band-shaped part having a first attaching part and a second attaching part between which the outer shaft is sandwiched and which face each other; and
a second band-shaped part having a third attaching part which face the second attaching part, the rotation axis being sandwiched between the third attaching part and the second attaching part.

2. The motor with a reduction gear according to claim 1,
wherein a gravity center of the motor part and the gear part is disposed within an area of a triangle connecting the first attaching part, the second attaching part, and the third attaching part.

3. The motor with a reduction gear according to claim 1 or 2,
wherein the first, second, and third attaching parts are formed in a same plane.
